# EUROPÄISCHE PATENTANMELDUNG

(11) **EP 1 134 143 A1**
(43) Veröffentlichungstag der Anmeldung: **19.09.2001**
(21) Anmeldenummer: 00105676.1
(22) Anmeldetag: 17.03.2000
(51) Int. Cl.: B62B 13/16, B62B 13/10

(54) **Leichtbauschlitten**

(71) Anmelder: Böhmer, Christian, 90461 Nürnberg (DE)
(72) Erfinder: Böhmer, Christian, 90461 Nürnberg (DE)

(57) **Zusammenfassung**

Die Erfindung betrifft einen Schlitten als Freizeit- oder Sportgerät, der durch seine Leichtbauweise wesentliche Vorteile gegenüber Schlitten herkömmlicher Bauweise bietet.

Die Anordnung der Lenkkufe 6 mit durch die Schwerkraft des Benutzers bewirkter automatischer Lenkrückstellung und kraftbegrenzender Auslenkungsbegrenzung erzeugt ein sicheres Fahrgefühl.

Die Ausnutzung der Selbstfederung und integrierte individuelle Sitzanpassung erhöhen den Fahrcomfort.

## Beschreibung

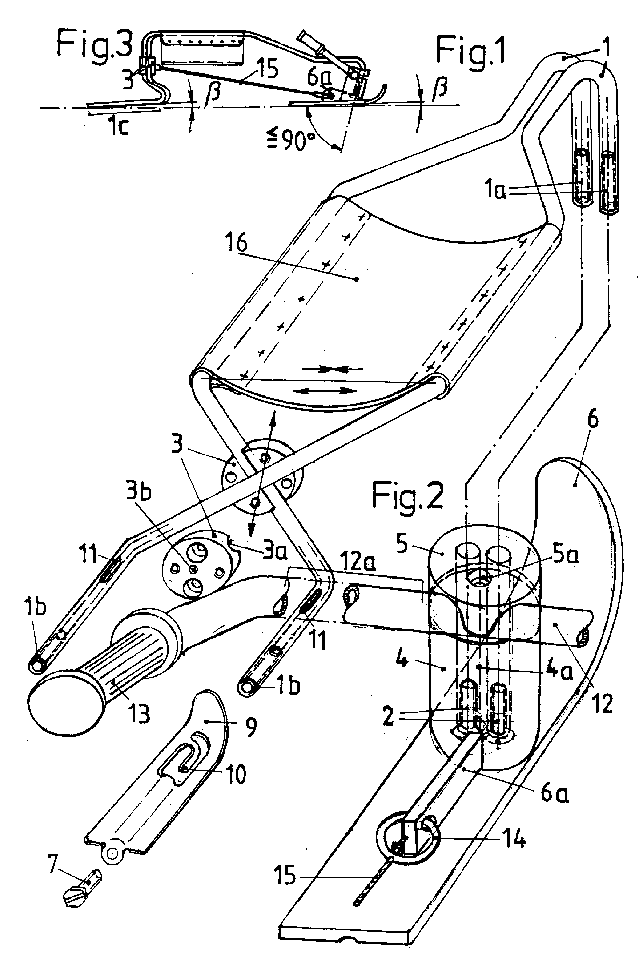

Der Schlittenrahmen besteht hauptsächlich aus zwei spiegelbildlich gebogenen Profilstangen- oder Rohren 1 Fig.1. Die Vorderenden 1a sind mit Gewindebohrungen versehen und in einem Rahmenlenkteil 4 mit Schrauben 2 drehbar befestigt. Die Rahmenenden 1b hinten sind ebenfalls mit Gewindebohrungen ausgestattet und haben für die Befestigung der Tiefschneekufen 9 jeweils ein Langloch 11. In dieses wird der Haken 10 der Tiefschneekufe 9 gesteckt und diese mit der Schraube 7 jeweils fixiert. Im hinteren Kreuzungsbereich sind die Rahmenteile 1 mit zwei Gleichteilen 3 verstellbar fest verbunden. Die Gleichteile 3 weisen eine profilangepaßte Quernut 3a auf mit der sie auf die Rahmenteile 1 geklipst werden und verschoben werden können. Sie sind mit wechselweise angeordneten Gewindelöchern und Durchgangsbohrungen versehen um in Einbaulage fest verschraubt werden zu können. Der Sitz 16 besteht aus einem Gurt oder einer flexibel gestalteten Schale. Werden die Gleichteile 3 nach oben verschoben, wird die Sitzweite kleiner, entsprechend bei Verschiebung nach unten verbreitet sich die Sitzbreite.

Das Rahmenlenkteil 4 und das Feststellteil 5 weisen hauptsächlich die parallelen Bohrungen für die Rahmenteile 1a und eine profilangepaßte Quernut für den Steuerbügel 12, sowie Befestigungsbohrungen (aus Übersichtlichkeitsgründen nur 1x angedeutet) 4a/5a auf. Mit dem Feststellteil 5 wird der Steuerbügel 12 und das Rahmenlenkteil 4 auf der Lenkkufe 6 befestigt, die eine Rippe 6a aufweist und das Rahmenlenkteil 4 formschlüssig gegen Verdrehung sichert. Eine Querbohrung in der Rippe 6a nimmt einen Ring 14 mit dem an ihm befestigten Seil 15 beweglich auf. Das andere Ende des Seiles 15 ist in einer Ausnehmung 3b des vorderen Gleichteiles 3 befestigt Fig.3 .

Die Aufgabe bestand darin, einen Schlitten mit einfachen Mitteln herstellen zu können, der einen höheren Fahrcomfort und eine individuelle Sitzanpassung bietet. dabei sollte eine Lenkung ohne " Bremswirkung " und größtmögliche Sicherheit gewährleistet sein.

Wie aus den Patentschriften US PS 5 335 925 und US-PS 1 194 383 ersichtlich sind lenkbare Schlitten in Rahmenkonstruktionen bekannt. Ihre Konstruktion und Herstellung erwies sich jedoch als letztendlich zu aufwendig.

Aufgabengemäß bietet sich eine Profilkonstruktion in Leichtbauweise mit integrierter Selbstfederung, Sitzanpassung und automatisch wirkender Lenkrückstellung sowie Geradeauslaufstabilisierung an.

Der Steuerbügel 12 trägt links und rechts die Griffstücke 13 sowie weist er links und rechts einen Auflagebereich 12a für die Füße des Benutzers und eine nicht dargestellte Durchgangsbohrung ( 4a/5a korrespondierend ) zu seiner Befestigung auf.

Wird der Schlitten durch das Gewicht des Benutzers belastet, verhindert das Seil 15, daß die Lenkkufe 6 nach vorn und die Rahmenenden 1b nach hinten ausweichen. Sie steht geradeaus in Fahrtrichtung. Wird nun eine Lenkbewegung mit dem Steuerbügel 12 ausgeführt, muß die Kraft,die durch das Gewicht des Benutzers auf das Seil 15 wirkt,überwunden werden. Somit sind ungewollte Lenkausschläge verhindert und eine automatische Lenkrückstellung und eine sichere Fahrweise gewährleistet. Die Auslenkung wird zusätzlich durch die Verschiebung der Rahmenteile 1a gegeneinander durch die Elastizität der Rahmenteile 1 erschwert und die Lenkrückstellung unterstützt. Die in Fig.3 gezeigte Neigung der Tiefschneekufen 9 und der Lenkkufe 6 in unbelastetem Zustand gekennzeichnet durch den nach hinten geneigten Winkel β zur Gleitebene bewirkt ein weiches Fahrgefühl, da die Fahrbahnunebenheiten durch die Selbstfederung " geschluckt "werden.

Die Neigung der parallelen Lenkbohrungen im Rahmenlenkteil 4 bewirken bei Auslenkung der Lenkkufe 6, daß diese eine kegelmantelförmige Drehbewegung ausführt, wobei die hinteren Enden derselben sich leicht nach unten gegen die Gleitebene bewegen. Somit ist in der Geradeausstellung ebenfalls durch die Auslenkungsgeometrie ein stabiler Geradeauslauf des Sportgerätes angestrebt, der wieder die Rückstellung der Lenkung unterstützt.

Der beschriebene Schlittenaufbau beschreibt nur eine Möglichkeit einer kostengünstigen Gestaltung.

Nur als Beispiel sei auf die Möglichkeit hingewiesen den Rahmen aus nur einem Profilteil zu erstellen dessen Enden die Gelenkteile (1a) darstellen und die im Sitzbereich eine schlaufenförmige Gestaltung aufweisen die mit entsprechenden Verbindungsteilen eine Rahmenstabilisierung ermöglichen und wo Kufenteile in den unteren Schlaufenbereichen angeordnet sind.

Ebenfals denkbar sind Ausführungen mit zwei Rahmenteilen die dadurch gekennzeichnet sind, das alle Enden in der Lenkkufe als Gelenkteile angeordnet sind und die hinteren Kufenteile gleichzeitig als Verstellteile und rahmenstabilisierend ausgebildet sind.

All diesen Möglichkeiten ist aber eine Leichtbauweise ( geringe Profilquerschnitte ) gemeinsam, die durch die zentrale Anordnung des durch die Schwerkraft wirksam werdenden Teiles (15) erreicht wird.

Eine denkbar weitere Ausführung könnte auf einfache Weise die Relativbewegung der Profilstangen zu Kippbewegungen der Tiefschneekufen (9) verwenden.

## Patentansprüche

1. Leichtbauschlitten mit Lenkkufe(n) **dadurch gekennzeichnet, daß** der Schlittenrahmen aus min. einer Profilstange(n) oder Rohr(en) (1) besteht, die Teil des Lenkmechanismus (1a) sind und selbstfedernde Kufen (1b) bilden oder tragen. Fig.1 zeigt z.B. eine zweiteilige Ausführung.

2. Leichtbauschlitten nach Anspruch 1 **dadurch gekennzeichnet, daß** das(die) Rahmenteil(e) (1) im Kreuzungsbereich mittels verstellbarer Teile, z.B. Gleichteile (3), einstellbar verbunden ist, um eine Sitzanpassung zu ermöglichen.

3. Leichtbauschlitten nach Anspruch 1 **dadurch gekennzeichnet, daß** die Lenkkufe (6) oder fest mit ihr verbundene Teile zentrisch mittels eines längsstabilen Teiles (15) an dem(den) Rahmenteil (en) (1) im Kreuzungsbereich oder an den Verstellteilen, wie Gleichteile (3), verbunden ist, wodurch der Schlittenrahmen stabilisiert wird sowie eine Geradeausfahrtstabilisierung und automatische Lenkrückstellung durch die Schwerkraft erreicht wird.

4. Leichtbauschlitten nach Anspruch 1 **dadurch gekennzeichnet, daß** der Steuerbügel (12), oder fest mit ihm verbundene Teile, Bereiche (12a) zur Auflage der Füße des Benutzers aufweisen und die Lenkung mit den Händen, z.B. an den Griffstücken (13), oder nur mit den Füßen, oder gemeinsam betätigbar sind.

5. Leichtbauschlitten nach Anspruch 2 **dadurch gekennzeichnet, daß** das(die) Rahmenteil(e) (1) flexibel gestaltete Sitzteile (16) trägt, die mittels Verstell- und Befestigungsteilen, z.B. Gleichteile (3), durch Verstellen an den Benutzer angepaßt werden können.

6. Leichtbauschlitten nach Anspruch 1 **dadurch gekennzeichnet, daß** das(die) Rahmenteil(e) (1) als Kufen (1c) ausgebildet ist(sind) oder auf denen fest oder beweglich Tiefschneekufen (9) angebracht sind, die nach hinten unten geneigt sind.
